# EUROPÄISCHE PATENTSCHRIFT

(11) **EP 3 140 474 B1**
(45) Veröffentlichungstag und Bekanntmachung des Hinweises auf die Patenterteilung: **14.03.2018**
(21) Anmeldenummer: 15723169.7
(22) Anmeldetag: 04.05.2015
(51) Int. Cl.: B60P 3/16, E04G 21/04

(54) **AUTOBETONPUMPE**
VEHICLE-MOUNTED CONCRETE PUMP
POMPE À BÉTON MOBILE

(30) Priorität: 06.05.2014 DE 102014208472
(43) Veröffentlichungstag der Anmeldung: 15.03.2017
(73) Patentinhaber: Putzmeister Engineering GmbH, 72631 Aichtal (DE)
(72) Erfinder: FÜGEL, Dietmar, 72649 Wolfschlugen (DE); SENFT, Michael, 87789 Woringen (DE); BRAUN, Matthias, 70597 Stuttgart (DE)
(74) Vertreter: Pfiz, Thomas
(86) Internationale Anmeldenummer: PCT/EP2015/059660
(87) Internationale Veröffentlichungsnummer: WO 2015/169722

(56) Entgegenhaltungen:
- WO-A1-2004/033822
- CN-U- 201 818 056
- CN-U- 202 370 261
- CN-Y- 201 424 817
- DE-A1- 2 724 810
- DE-A1- 3 122 725
- DE-U1- 7 623 378

## Beschreibung

Die Erfindung betrifft eine Autobetonpumpe mit einem Fahrzeug und einem darauf transportierbaren, an einem Mastbock um eine Vertikalachse drehbar und um eine Horizontalachse schwenkbar gelagerten Betonverteilermast, wobei der Mastbock über Verbindungsmittel auf mehreren Profilträgern, vorzugsweise zwei parallelen I-Profilträgern eines fahrzeugfesten Aufbaurahmens gehalten ist.

Bei herkömmlicher Konstruktion einer Autobetonpumpe ist auf dem Fahrzeug-Chassis, welches beispielsweise durch C-förmige Längs- und Querträger gebildet ist, ein sogenannter Aufbaurahmen aufgesetzt, der aus 1-förmigen Profilträgern besteht, die an ihrem unteren Flansch mit dem Chassis verschraubt sind. Darüber befindet sich noch ein weiterer I-Profilstab als Träger für den Mastbock, dessen bodenseitig geschlossener Kasten keine weiteren Verbindungsmöglichkeiten bietet. Solche I-Stahlträger sind jedoch nur in Standardgrößen erhältlich, so dass der nach oben verfügbare Bauraum für den Mastbock durch die Stahlträgerhöhe entsprechend eingeschränkt wird. Eine gattungsgemäße Autobetonpumpe ist beispielsweise aus der CN 201 424 817 Y bekannt.

Ausgehend hiervon liegt der Erfindung die Aufgabe zugrunde, den im Stand der Technik bekannten Aufbau von Autobetonpumpen weiter zu verbessern und eine sowohl hinsichtlich der Bauraumnutzung und Stabilität als auch der Montage- und Reparaturfreundlichkeit optimierte Konstruktion anzugeben.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen. Die Erfindung geht von dem Gedanken aus, eine Schraubverbindung des Mastbocks mit möglichst geringer Aufbauhöhe zu erlauben. Dementsprechend wird erfindungsgemäß vorgeschlagen, dass zwischen dem Mastbock und jedem Profilträger mindestens eine Anschraubleiste als Verbindungsmittel angeordnet ist, wobei die Anschraubleiste über ihre Länge verteilt eine Mehrzahl von Montageausnehmungen und darin mündende Schraubkanäle für Schraubverbindungen mit dem Profilträger aufweist. Durch eine solche plattenförmige Leiste kann im Vergleich zu einem herkömmlichen I-Profilträger bei geringerer Höhe eine vergleichbare Stabilität gewährleistet werden, wobei die Aussparungen für die Montage und den Einsatz der Schrauben für den beabsichtigten Zweck mit hinreichender Belastungsfestigkeit dimensionierbar sind. Auf diese Weise lassen sich folgende Vorteile erreichen:
- Bei verringerter Höhe der Anschraubleiste kann die Höhe des Mastbocks entsprechend vergrößert werden, ohne den verfügbaren Bauraum nach oben zu überschreiten. Dadurch kann das Widerstandsmoment des Bockes vorteilhaft vergrößert werden;
- In der Endmontage wird nicht mehr geschweißt, sondern nur geschraubt und ggf. verbolzt. Die Montage kann dadurch schneller und kostengünstiger erfolgen;
- Weniger Verspannungen, da nicht mehr geschweißt wird;
- Die Mastbock-Baugruppe wird kleiner und lässt sich einfacher transportieren sowie vor Ort bereithalten;
- Der Austausch des Mastbockes wird vereinfacht.

Vorteilhafterweise ist im Sinne einer optimierten Bauraumnutzung die Breite der Anschraubleiste größer als die über den Profilträger überstehende Höhe der Anschraubleiste.

Für eine Erleichterung der Montage ist es vorteilhaft, wenn die Montageausnehmungen an einer freien Längsseite der Anschraubleiste über eine Eingriffsöffnung zugänglich und als Taschen bodenseitig geschlossen sind.

Eine weitere Verbesserung sieht vor, dass die Montageausnehmungen entlang der Anschraubleiste beidseitig spiegelsymmetrisch zueinander eingebracht sind.

Um eine hohe Bauteilstabilität sicherzustellen, sollte die Tiefe der Montageausnehmungen weniger als die halbe Breite der Anschraubleiste betragen, so dass jedenfalls ein Mittelsteg erhalten bleibt. Günstig ist es auch, wenn die Montageausnehmungen durch Querstege der Anschraubleiste voneinander getrennt sind.

Um einen hinreichenden Montagefreiraum zu gewähren, ist es von Vorteil, wenn die Montageausnehmungen in Längsrichtung der Anschraubleiste gesehen einen Langlochquerschnitt aufweisen und mit jeweils mindestens zwei Schraubkanälen kommunizieren.

In einer weiteren vorteilhaften Ausgestaltung ist es vorgesehen, dass die vertikal verlaufenden Schraubkanäle eine auf dem Profilträger aufliegende Bodenfläche der Anschraubleiste durchdringen.

Eine Schraubmontage lässt sich dadurch zweckmäßig gestalten, dass die Verbindungsmittel in die Schraubkanäle eingesetzte Schrauben umfassen, deren Schraubenkopf in einer Montageausnehmung angeordnet ist und deren Schraubenschaft eine Bohrung eines Flansches des Profilträgers durchgreift. Denkbar ist auch eine umgekehrte Ausrichtung der Schrauben.

Zur sicheren Vorfixierung ist es vorteilhaft, wenn die Anschraubleiste an ihrer Oberseite an einer Bodenwandung des Mastbocks angeschweißt oder angeschraubt ist.

Eine hinsichtlich Fertigung und erzielbarer Stabilität vorteilhafte Ausführung sieht vor, dass die Anschraubleiste als Flachstab aus einem Vollmaterial insbesondere aus Baustahl gebildet ist, wobei die Montageausnehmungen seitlich in den Flachstab eingefräst sind.

Um ein Verbiegen der Unterkonstruktion im Fahr- und Arbeitsbetrieb zu vermeiden, ist es von Vorteil, wenn der Bock über mindestens eine Strebe heckseitig an dem Fahrzeug abgestützt ist, wobei die Strebe über einen endseitigen Strebenschuh mit einem Profilträger verschraubt ist, so dass auch an dieser Stelle eine Montagevereinfachung erzielt wird.

Denkbar ist es auch, dass die Anschraubleiste aus einer Mehrzahl von einzelnen Leistenabschnitten zusammengesetzt ist, wobei die Leistenabschnitte jeweils mindestens eine Montageausnehmung und mindestens einen darin mündenden Schraubkanal zur Schraubverbindung mit dem Profilträger aufweisen. Die ggf. im Abstand voneinander angeordneten Leistenabschnitte ergänzen sich somit im montierten Zustand funktionell als Anschraubleiste, wobei die Leistenabschnitte fest an einer Bodenwandung des Mastbocks angebracht sind.

Im Folgenden wird die Erfindung anhand des in der Zeichnung schematisch dargestellten Ausführungsbeispiels näher erläutert. Es zeigen:
- Fig. 1: eine Seitenansicht einer Autobetonpumpe mit schematisch angedeutetem Betonverteilermast;
- Fig. 2: eine Ausschnittsvergrößerung einer Anschraubleiste im Bereich II der Fig. 1;
- Fig. 3: einen Schnitt entlang der strichpunktierten Linie der Fig. 2;
- Fig. 4: einen Querschnitt der Anschraubleiste.

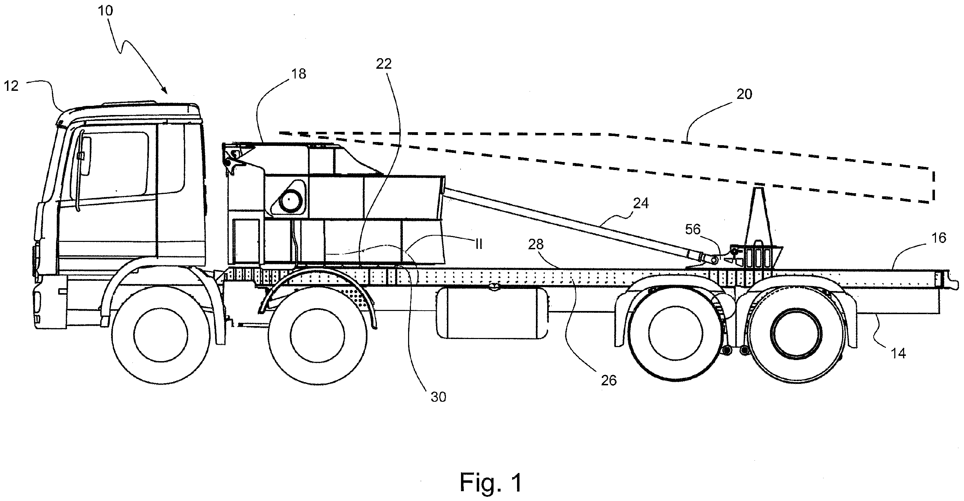

Die in Fig. 1 gezeigte Autobetonpumpe 10 umfasst ein Transportfahrzeug 12 mit einem Fahrgestell 14 und einem Aufbaurahmen 16, einen Mastbock 18 und einen an dem Mastbock um eine Hochachse drehbar und eine Horizontalachse schwenkbar gelagerten, aus mehreren als Armpaket faltbaren Mastarmen bestehenden Betonverteilermast 20 zum Fördern von Flüssigbeton zu einem fahrzeugfernen Betonierbereich, wobei der Mastbock 18 an seinem Unterbau über Verbindungsmittel 22 und heckseitig über Streben 24 auf dem fahrzeugfesten Aufbaurahmen 16 fixiert ist.

Der Aufbaurahmen 16 umfasst zwei I-Profilträger 26, die parallel zueinander in Fahrzeuglängsrichtung verlaufen. Diese sind an ihrem oberen Flansch 28 mit Bohrungen zum Anschrauben der Verbindungsmittel 22 versehen, wie es nachstehend näher erläutert wird.

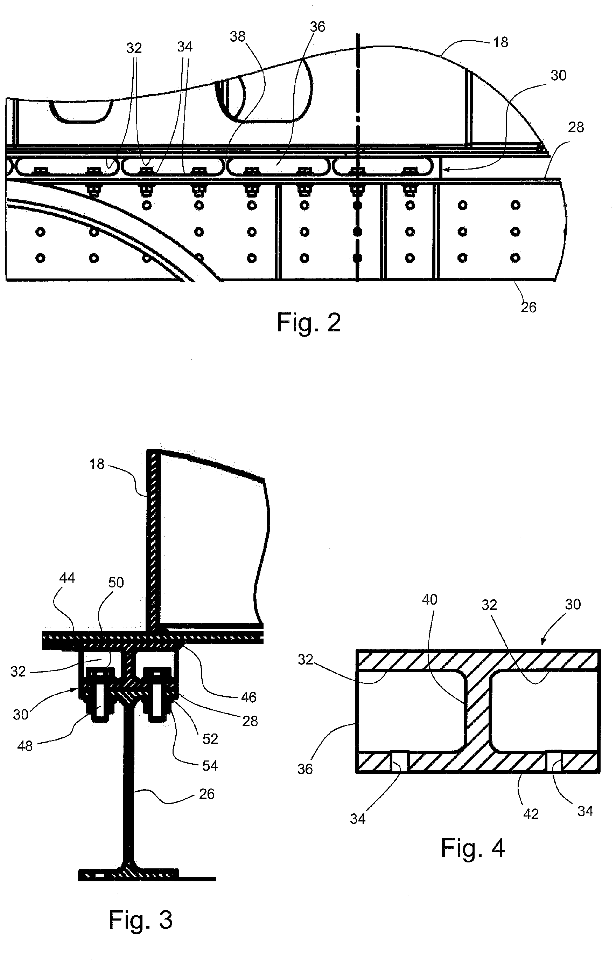

Wie auch aus Fig. 2 ersichtlich, ist als Verbindungsmittel 22 zwischen dem Mastbock 18 und den beiden I-Profilträgern 26 (bzw. Doppel-T-Profilträgern) jeweils eine Anschraubleiste 30 vorgesehen. Die Anschraubleisten 30 sind plattenförmig bzw. langgestreckt-flach ausgebildet, so dass ihre Breite größer als ihre über die I-Profilträger 26 überstehende Höhe ist. Sie besitzen über ihre Länge verteilt eine Mehrzahl von Montageausnehmungen 32 und darin mündende Schraubkanäle 34 für Schraubverbindungen mit dem Profilträger 26.

Die Montageausnehmungen 32 weisen in Längsrichtung der Anschraubleiste 30 gesehen einen Langlochquerschnitt auf und erlauben über eine Öffnung 36 an einer freien Längsseite der Anschraubleiste 30 einen Eingriff zu jeweils zwei Schraubkanälen 34. Dabei sind die Montageausnehmungen 32 durch Querstege 38 der Anschraubleisten 30 voneinander getrennt.

Wie am besten in Fig. 3 und 4 erkennbar, sind die Montageausnehmungen 32 als Taschen bodenseitig geschlossen und entlang der Anschraubleiste 30 beidseitig spiegelsymmetrisch zueinander eingebracht, wobei die Tiefe der weniger als die halbe Breite der Anschraubleiste 30 beträgt, so dass ein Mittelsteg 40 erhalten bleibt.

Zweckmäßig bestehen die Anschraubleisten 30 als Flachstab aus Baustahl, in welchen die Montageausnehmungen 32 von den Flachseiten her beidseitig eingefräst sind. Die im Montagezustand vertikal verlaufenden Schraubkanäle 34 werden dann von der Bodenseite 42 der Anschraubleisten 30 her eingebohrt, so dass sie in den Montageausnehmungen 32 münden.

Jede Anschraubleiste 30 ist an ihrer Oberseite an einer Bodenwandung 44 des Mastbocks 18 über Schweißverbindungen 46 fest fixiert (Fig. 3). Denkbar ist es auch, Bohrungen zum Verschrauben mit dem Mastbock vorzusehen, so dass auch eine Montage bereits lackierter Bauteile problemlos möglich ist. Die Verbindung mit dem I-Profilträger wird durch in die Schraubkanäle 34 eingesetzte Schrauben 48 hergestellt, deren Schraubenkopf 50 in der Montageausnehmung 32 angeordnet ist und deren Schraubenschaft eine fluchtende Bohrung 52 des Flansches 28 des Profilträgers 26 sowie eine Kontermutter 54 durchgreift. Neben der bodenseitigen Schraubmontage des Bocks 18 lassen sich auch die beiden Streben über jeweils einen endseitigen Strebenschuh 56 mit den Profilträgern 26 verschrauben. Bei der Endmontage wird somit nicht mehr geschweißt, sondern nur noch geschraubt bzw. die Strebe 24 mit Bock 18 und Strebenschuh 56 verbolzt.

## Patentansprüche

1. Autobetonpumpe (10) mit einem Fahrzeug (12) und einem darauf transportierbaren, an einem Mastbock (18) um eine Vertikalachse drehbar und um eine Horizontalachse schwenkbar gelagerten Betonverteilermast (20), wobei der Mastbock (18) über Verbindungsmittel (22) auf Profilträgern (26), vorzugsweise zwei parallelen I-Profilträgern eines fahrzeugfesten Aufbaurahmens (16) gehalten ist, **dadurch gekennzeichnet, dass** zwischen dem Mastbock (18) und jedem Profilträger (26) eine Anschraubleiste (30) als Verbindungsmittel (22) angeordnet ist, wobei die Anschraubleiste (30) über ihre Länge verteilt eine Mehrzahl von Montageausnehmungen (32) und darin mündende Schraubkanäle (34) für Schraubverbindungen mit dem Profilträger (26) aufweist.

2. Autobetonpumpe nach Anspruch 1, **dadurch gekennzeichnet, dass** die Breite der Anschraubleiste (30) größer als die über den Profilträger (26) überstehende Höhe der Anschraubleiste (30) ist.

3. Autobetonpumpe nach Anspruch 1 oder 2, **dadurch gekennzeichnet, dass** die Montageausnehmungen (32) an einer freien Längsseite der Anschraubleiste (30) über eine Eingriffsöffnung (36) zugänglich und als Taschen bodenseitig geschlossen sind.

4. Autobetonpumpe nach einem der Ansprüche 1 bis 3, **dadurch gekennzeichnet, dass** die Montageausnehmungen (32) entlang der Anschraubleiste (30) beidseitig spiegelsymmetrisch zueinander eingebracht sind.

5. Autobetonpumpe nach einem der Ansprüche 1 bis 4, **dadurch gekennzeichnet, dass** die Tiefe der Montageausnehmungen (32) weniger als die halbe Breite der Anschraubleiste (30) beträgt.

6. Autobetonpumpe nach einem der Ansprüche 1 bis 5, **dadurch gekennzeichnet, dass** die Montageausnehmungen (32) durch Querstege (38) der Anschraubleiste (30) voneinander getrennt sind.

7. Autobetonpumpe nach einem der Ansprüche 1 bis 6, **dadurch gekennzeichnet, dass** die Montageausnehmungen (32) in Längsrichtung der Anschraubleiste (30) gesehen einen Langlochquerschnitt aufweisen und mit jeweils mindestens zwei Schraubkanälen (34) kommunizieren.

8. Autobetonpumpe nach einem der Ansprüche 1 bis 7, **dadurch gekennzeichnet, dass** die vertikal verlaufenden Schraubkanäle (34) eine auf dem Profilträger (26) aufliegende Bodenfläche (42) der Anschraubleiste (30) durchdringen.

9. Autobetonpumpe nach einem der Ansprüche 1 bis 8, **dadurch gekennzeichnet, dass** die Verbindungsmittel (22) in die Schraubkanäle (34) eingesetzte Schrauben (48) umfassen, deren Schraubenkopf (50) in einer Montageausnehmung (32) angeordnet ist und deren Schraubenschaft eine Bohrung (52) eines Flansches (28) des Profilträgers (26) durchgreift, oder umgekehrt.

10. Autobetonpumpe nach einem der Ansprüche 1 bis 9, **dadurch gekennzeichnet, dass** die Anschraubleiste (30) an ihrer Oberseite an einer Bodenwandung (44) des Mastbocks (18) angeschweißt oder angeschraubt ist.

11. Autobetonpumpe nach einem der Ansprüche 1 bis 10, **dadurch gekennzeichnet, dass** die Anschraubleiste (30) als Flachstab aus einem Vollmaterial insbesondere aus Baustahl gebildet ist, wobei die Montageausnehmungen (32) seitlich in den Flachstab eingefräst sind.

12. Autobetonpumpe nach einem der Ansprüche 1 bis 11, **dadurch gekennzeichnet, dass** der Mastbock (18) über mindestens eine Strebe (24) heckseitig an dem Fahrzeug abgestützt ist, wobei die Strebe (24) über einen endseitigen Strebenschuh (56) mit einem Profilträger (26) verschraubt ist.

13. Autobetonpumpe nach einem der Ansprüche 1 bis 12, **dadurch gekennzeichnet, dass** die Anschraubleiste (30) aus einer Mehrzahl von einzelnen Leistenabschnitten zusammengesetzt ist, wobei die Leistenabschnitte jeweils mindestens eine Montageausnehmung (32) und mindestens einen darin mündenden Schraubkanal (34) zur Schraubverbindung mit dem Profilträger (26) aufweisen.

## Claims

1. A vehicle-mounted concrete pump (10) having a vehicle (12) and a concrete distribution boom (20) which can be transported thereon and which is supported on a boom pedestal (18) so as to be able to be rotated about a vertical axis and so as to be able to be pivoted about a horizontal axis, wherein the boom pedestal (18) is retained via connection means (22) on profile carriers (26), preferably two parallel I-shaped profile carriers, of a structural frame (16) which is secured to the vehicle, **characterized in that** a screw-mounting bar (30) is arranged as a connection means (22) between the boom pedestal (18) and each profile carrier (26), wherein the screw-mounting bar (30) has distributed over the length thereof a plurality of assembly recesses (32) and screw channels (34) which open therein for screw connections with respect to the profile carrier (26).

2. The vehicle-mounted concrete pump as claimed in claim 1, **characterized in that** the width of the screw-mounting bar (30) is greater than the height of the screw-mounting bar (30) protruding above the profile carrier (26).

3. The vehicle-mounted concrete pump as claimed in claim 1 or 2, **characterized in that** the assembly recesses (32) are accessible at a free longitudinal side of the screw-mounting bar (30) via an access opening (36) and are closed as pockets at the base side.

4. The vehicle-mounted concrete pump as claimed in one of claims 1 to 3, **characterized in that** the assembly recesses (32) are introduced along the screw-mounting bar (30) at both sides in a mirror-symmetrical manner relative to each other.

5. The vehicle-mounted concrete pump as claimed in one of claims 1 to 4, **characterized in that** the depth of the assembly recesses (32) is less than half the width of the screw-mounting bar (30).

6. The vehicle-mounted concrete pump as claimed in one of claims 1 to 5, **characterized in that** the assembly recesses (32) are separated from each other by means of transverse webs (38) of the screw-mounting bar (30).

7. The vehicle-mounted concrete pump as claimed in one of claims 1 to 6, **characterized in that** the assembly recesses (32) have when viewed in the longitudinal direction of the screw-mounting bar (30) an elongate hole cross-section and communicate in each case with at least two screw channels (34).

8. The vehicle-mounted concrete pump as claimed in one of claims 1 to 7, **characterized in that** the vertically extending screw channels (34) extend through a base face (42) of the screw-mounting bar (30) positioned on the profile carrier (26).

9. The vehicle-mounted concrete pump as claimed in one of claims 1 to 8, **characterized in that** the connection means (22) comprise screws (48) which are inserted into the screw channels (34) and whose screw head (50) is arranged in an assembly recess (32) and whose screw shaft engages through a hole (52) of a flange (28) of the profile carrier (26), or vice versa.

10. The vehicle-mounted concrete pump as claimed in one of claims 1 to 9, **characterized in that** the screw-mounting bar (30) is welded or screwed at the upper side thereof to a base wall (44) of the boom pedestal (18).

11. The vehicle-mounted concrete pump as claimed in one of claims 1 to 10, **characterized in that** the screw-mounting bar (30) is formed as a flat rod from a solid material, in particular from construction steel, wherein the assembly recesses (32) are milled laterally in the flat rod.

12. The vehicle-mounted concrete pump as claimed in one of claims 1 to 11, **characterized in that** the boom pedestal (18) is supported by means of at least one strut (24) at the rear side on the vehicle, wherein the strut (24) is screwed to a profile carrier (26) by means of an end-side strut fitting (56).

13. The vehicle-mounted concrete pump as claimed in one of claims 1 to 12, **characterized in that** the screw-mounting bar (30) is composed of a plurality of individual bar portions, wherein the bar portions each have at least one assembly recess (32) and at least one screw channel (34) which opens therein for screw connection to the profile carrier (26).

## Revendications

1. Pompe à béton mobile (10) avec un véhicule (12) et un mât distributeur de béton (20) transportable dessus, pouvant tourner autour d'un axe vertical au niveau d'un socle de mât (18) et monté de manière à pouvoir pivoter autour d'un axe horizontal, dans laquelle le socle de mât (18) est maintenu par le biais de moyens de liaison (22) sur des supports profilés (26), de préférence deux supports profilés en I d'un cadre de montage solidaire du véhicule (16), **caractérisée en ce que,** entre le socle de mât (18) et chaque support profilé (26), un listeau à visser (30) est disposé en tant que moyen de liaison (22), dans laquelle le listeau à visser (30) présente, répartie sur sa longueur, une pluralité d'évidements de montage (32) et de canaux de vissage (34) débouchant dans ceux-ci pour des liaisons par vissage avec le support profilé (26).

2. Pompe à béton mobile selon la revendication 1, **caractérisée en ce que** la largeur du listeau à visser (30) est plus grande que la hauteur du listeau à visser (30) dépassant du support profilé (26).

3. Pompe à béton mobile selon la revendication 1 ou 2, **caractérisée en ce que** les évidements de montage (32) sont accessibles au niveau d'un côté longitudinal libre du listeau à visser (30) par le biais d'une ouverture de préhension (36) et fermés côté inférieur en tant que poche.

4. Pompe à béton mobile selon l'une des revendications 1 à 3, **caractérisée en ce que** les évidements de montage (32) sont mis en place le long du listeau à visser (30) symétriquement les uns par rapport aux autres des deux côtés.

5. Pompe à béton mobile selon l'une des revendications 1 à 4, **caractérisée en ce que** la profondeur des évidements de montage (32) représente moins de la moitié de la largeur du listeau à visser (30).

6. Pompe à béton mobile selon l'une des revendications 1 à 5, **caractérisée en ce que** les évidements de montage (32) sont séparés les uns des autres par le biais d'éléments transversaux (38) du listeau à visser (30).

7. Pompe à béton mobile selon l'une des revendications 1 à 6, **caractérisée en ce que** les évidements de montage (32) présentent, vus dans la direction longitudinale du listeau à visser (30), une section transversale de trou allongé et communiquent avec respectivement au moins deux canaux de vissage (34).

8. Pompe à béton mobile selon l'une des revendications 1 à 7, **caractérisée en ce que** les canaux de vissage s'étirant verticalement (34) pénètrent dans une surface inférieure (42) du listeau de vissage (30) reposant sur le support profilé (26).

9. Pompe à béton mobile selon l'une des revendications 1 à 8, **caractérisée en ce que** les moyens de liaison (22) comprennent des vis (48) mises en place dans les canaux de vissage (34), vis dont la tête de vis (50) est disposée dans un évidement de montage (32) et dont la tige de vis pénètre dans un alésage (52) d'une bride (28) du support profilé (26) ou inversement.

10. Pompe à béton mobile selon l'une des revendications 1 à 9, **caractérisée en ce que** le listeau à visser (30) est soudé ou vissé au niveau de son côté supérieur à une paroi inférieure (44) du socle de mât (18).

11. Pompe à béton mobile selon l'une des revendications 1 à 10, **caractérisée en ce que** le listeau à visser (30) est formé en tant que baguette plate en matériau massif, en particulier en acier de construction, dans laquelle les évidements de montage (32) sont fraisés latéralement dans la baguette plate.

12. Pompe à béton mobile selon l'une des revendications 1 à 11, **caractérisée en ce que** le socle de mât (18) prend appui par l'arrière au niveau du véhicule par le biais d'au moins une entretoise (24), dans laquelle l'entretoise (24) est vissée au support profilé (26) par le biais d'une douille de mât côté extrémité (56).

13. Pompe à béton mobile selon l'une des revendications 1 à 12, **caractérisée en ce que** le listeau à visser (30) est composé d'une pluralité de sections de listeau distinctes, dans laquelle les sections de listeau présentent respectivement au moins un évidement de montage (32) et au moins un canal de vissage (34) débouchant dans celui-ci en vue de la liaison par vissage au support profilé (26).
